# EUROPEAN PATENT APPLICATION

(11) **EP 4 822 160 A1**
(43) Date of publication of application: **14.10.2026**
(21) Application number: 26172041.1
(22) Date of filing: 13.04.2026
(51) Int. Cl.: F02C 7/32, F02C 7/36

(54) **AIRCRAFT POWERPLANT GEARBOX WITH SELECTABLE POWER COUPLER**

(30) Priority: 11.04.2025 US 202519176927
(71) Applicant: RTX Corporation, Farmington, CT 06032 (US)
(72) Inventor: CLARK, Thomas E., Wells, 04090 (US); AKIN, John, Carmel, 46033 (US); CHOE, Jung Muk, Glastonbury, 06033 (US); YAZICI, Murat, Glastonbury, 06033 (US)
(74) Representative: Dehns

(57) **Abstract**

An aircraft powerplant assembly includes a gearbox (102) and a power coupler (104). The gearbox (102) includes a first power transfer apparatus (128) and a second power transfer apparatus (130). The first power transfer apparatus (128) is configured to couple and transfer first mechanical power through the gearbox (102) between a first engine apparatus (142) and a first engine accessory (106). The second power transfer apparatus (130) is configured to couple and transfer second mechanical power through the gearbox (102) between a second engine apparatus (152) and a second engine accessory (108) during a first mode. The power coupler (104) includes a variable speed transmission (160) and a clutch (162). The variable speed transmission (160) is coupled between the clutch (162) and the second power transfer apparatus (130). The clutch (162) is configured to couple the variable speed transmission (160) to the second engine apparatus (152) during the first mode. The clutch (162) is configured to decouple the variable speed transmission (160) from the second engine apparatus (152) during a second mode.

## Description

### BACKGROUND OF THE INVENTION

### 1. Technical Field

This invention relates generally to an aircraft powerplant and, more particularly, to an accessory system for the aircraft powerplant.

### 2. Background Information

An aircraft powerplant such as a turbofan engine includes an accessory system. This accessory system may include various accessories such as fluid pumps, electric motors, electric generators, and the like coupled to an accessory gearbox. Various types and configurations of accessory systems are known in the art. While these known accessory systems have various benefits, there is still room in the art for improvement.

### SUMMARY OF THE INVENTION

According to an aspect of the present invention, an assembly is provided for an aircraft powerplant. This assembly includes a gearbox and a power coupler. The gearbox includes a first power transfer apparatus and a second power transfer apparatus that is operationally independent of the first power transfer apparatus. The first power transfer apparatus is configured to operatively couple and transfer first mechanical power through the gearbox between a first engine apparatus and a first engine accessory. The second power transfer apparatus is configured to operatively couple and transfer second mechanical power through the gearbox between a second engine apparatus and a second engine accessory during a first mode. The power coupler includes a variable speed transmission and a clutch. The variable speed transmission is operatively coupled between the clutch and the second power transfer apparatus. The clutch is configured to operatively couple the variable speed transmission to the second engine apparatus during the first mode. The clutch is configured to operatively decouple the variable speed transmission from the second engine apparatus during a second mode.

According to another aspect of the present invention, another assembly is provided for an aircraft powerplant. This assembly includes an engine core, a gearbox, an electric machine and a power coupler. The engine core includes a compressor section, a combustor section, a turbine section, a flowpath and an engine rotating structure. The flowpath extends through the compressor section, the combustor section and the turbine section. The engine rotating structure includes a bladed rotor in the compressor section or the turbine section along the flowpath. The gearbox is outside of the engine core. The electric machine is mounted to the gearbox. The power coupler is mounted to the gearbox. The power coupler is configured as or otherwise includes a hydrostatic transmission configured to operatively couple the engine rotating structure to the gearbox. The gearbox is configured to operatively couple the hydrostatic transmission to the electric machine. Optionally, the power coupler may also include a clutch operatively coupling the hydrostatic transmission to the gearbox.

According to still another aspect of the present invention, another assembly is provided for an aircraft powerplant. This assembly includes an engine core, a gearbox, a power coupler and an electric machine. The engine core includes a compressor section, a combustor section, a turbine section, a flowpath and an engine rotating structure. The flowpath extends through the compressor section, the combustor section and the turbine section. The engine rotating structure includes a bladed rotor in the compressor section or the turbine section along the flowpath. The gearbox is outside of the engine core. The power coupler is mounted to the gearbox. The power coupler is configured as or otherwise includes a variable speed transmission. The electric machine is mounted to the power coupler. The variable speed transmission operatively couples the electric machine to the gearbox. The gearbox operatively couples the variable speed transmission to the engine rotating structure. Optionally, the power coupler may also include a clutch operatively coupling the variable speed transmission to the gearbox.

The following optional features may be applied to any of the above aspects.

The variable speed transmission may include a first member and a second member. The first member may be operationally coupled to the second power transfer apparatus. The second member may be operationally coupled to the clutch. The variable speed transmission may be configured such that a rotational speed of the first member is maintained uniform as a rotational speed of the second member changes.

The variable speed transmission may be configured as or otherwise include a constant speed transmission.

The variable speed transmission may be configured as or otherwise include a hydrostatic transmission.

The power coupler may be configured to: operate in the first mode when a rotational speed of the second engine apparatus is equal to or less than a threshold; and/or operate in the second mode when the rotational speed of the second engine apparatus is greater than the threshold.

The assembly may also include the second engine accessory. The power coupler may be configured to operate in the first mode when the second engine accessory is operational. The power coupler may be configured to operate in the second mode when the second engine accessory is non-operational.

The power coupler may be mounted to an exterior of the gearbox.

The power coupler may be configured as a single line replaceable unit that is removably mounted to the gearbox.

The assembly may also include the second engine accessory mounted to the gearbox through the power coupler.

The assembly may also include the second engine accessory mounted to the gearbox independent of the power coupler.

The power coupler may be mounted to a first side of the gearbox. The second engine accessory may be mounted to a second side of the gearbox opposite the first side of the gearbox.

The second power transfer apparatus may be configured as a pass-through shaft extending through the gearbox.

The assembly may also include the second engine accessory. The second engine accessory may be configured as an electric machine.

The electric machine may be an electric motor.

The electric machine may be an electric motor-generator.

The electric machine may be an electric generator.

The assembly may also include the first engine apparatus, the second engine apparatus, a compressor section, a combustor section, a turbine section and a flowpath. The first engine apparatus may be configured as or otherwise include a first engine rotating structure. The second engine apparatus may be configured as or otherwise include a second engine rotating structure. The flowpath may extend through the compressor section, the combustor section and the turbine section. The first engine rotating structure may include a first bladed rotor disposed in the compressor section or the turbine section. The second engine rotating structure may include a second bladed rotor disposed in the compressor section or the turbine section.

The first bladed rotor may be a first turbine rotor disposed in the turbine section. The second bladed rotor may be a second turbine rotor disposed in the turbine section. The first bladed rotor may be disposed between the second bladed rotor and the combustor section along the flowpath.

The first power transfer apparatus may include a gear system disposed within an interior of the gearbox.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic sectional illustration of an aircraft propulsion system.
FIG. 2 is a schematic illustration of a portion of the aircraft propulsion system with an accessory system.
FIG. 3 is a graph depicting engine apparatus speed versus engine accessory rotor speed for various modes of operation.
FIGS. 4 and 5 are schematic illustrations of a portion of the aircraft propulsion system at the accessory system with various alternative power coupler arrangements.
FIG. 6 is a schematic illustration of a portion of the aircraft propulsion system with an electric machine electrically coupled to an electrical system.

### DETAILED DESCRIPTION

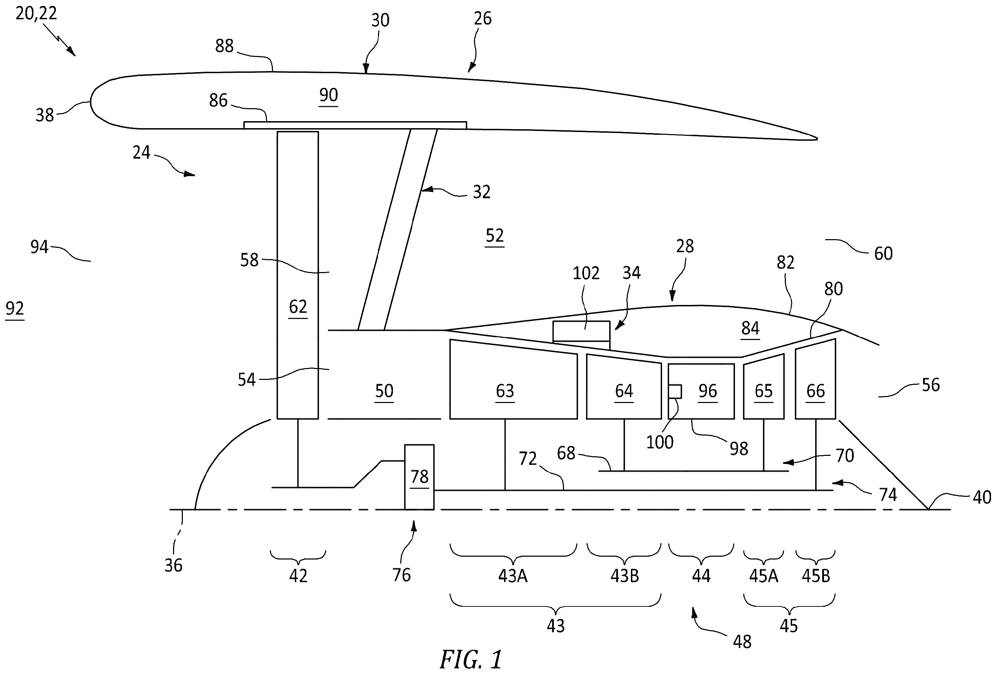

FIG. 1 illustrates a powerplant 20 for an aircraft. The aircraft may be an airplane, a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present invention, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted and/or open propulsor rotor propulsion system. Moreover, the aircraft powerplant 20 is not limited to propulsion system applications. The aircraft powerplant 20, for example, may also (or alternatively) be configured as an electrical power system for the aircraft; e.g., an auxiliary power unit (APU).

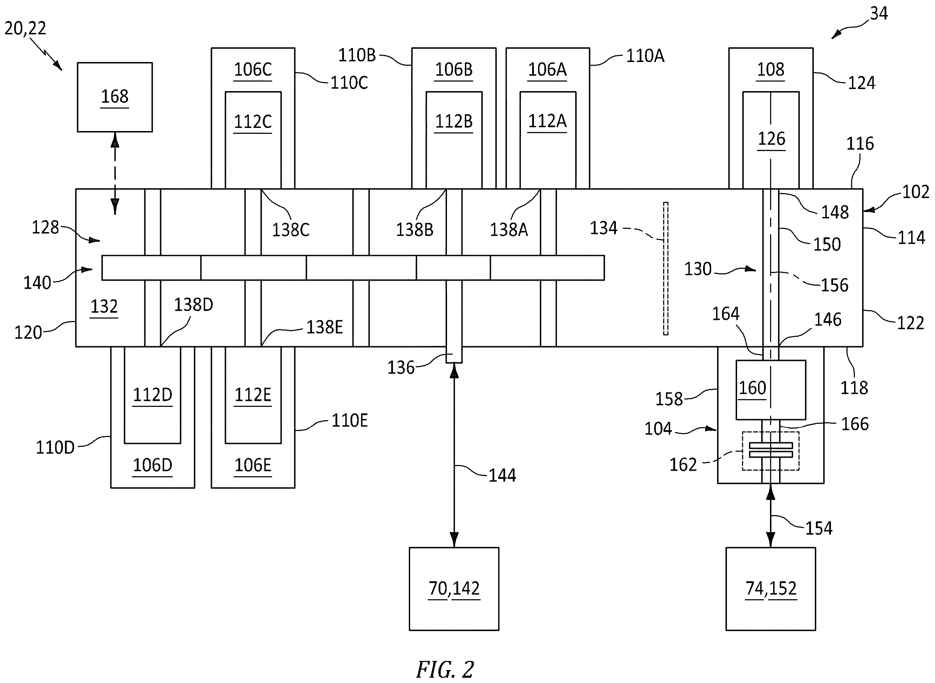

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 also includes an accessory system 34 (see also FIG. 2) servicing one or more components and/or sub-systems of the aircraft propulsion system 22 and its turbine engine 24. The aircraft propulsion system 22 extends axially along a powerplant axis 36 between an axial upstream, forward end 38 of the aircraft propulsion system 22 and an axial downstream, aft end 40 of the aircraft propulsion system 22. Briefly, the powerplant axis 36 may be a centerline axis of the aircraft propulsion system 22, the turbine engine 24 and/or one or more of its members. The powerplant axis 36 may also or alternatively be a rotational axis for one or more members of the turbine engine 24.

The aircraft propulsion system 22 and its turbine engine 24 of FIG. 1 include a propulsor section 42 (e.g., a fan section), a compressor section 43, a combustor section 44 and a turbine section 45. The compressor section 43 of FIG. 1 includes a low pressure compressor (LPC) section 43A and a high pressure compressor (HPC) section 43B. The turbine section 45 of FIG. 1 includes a high pressure turbine (HPT) section 45A and a low pressure turbine (LPT) section 45B. At least (or only) the LPC section 43A, the HPC section 43B, the combustor section 44, the HPT section 45A and the LPT section 45B collectively form a core 48 (e.g., a gas generator) of the turbine engine 24. The aircraft propulsion system 22 and its turbine engine 24 of FIG. 1 also include a core flowpath 50 (e.g., an annular core flowpath) and a bypass flowpath 52 (e.g., an annular bypass flowpath). The core flowpath 50 extends sequentially through the LPC section 43A, the HPC section 43B, the combustor section 44, the HPT section 45A and the LPT section 45B from an airflow inlet 54 into the core flowpath 50 to a combustion products exhaust 56 out from the core flowpath 50. The bypass flowpath 52 extends through a bypass duct from an airflow inlet 58 into the bypass flowpath 52 to an airflow exhaust 60 from the bypass flowpath 52, where the bypass duct may be formed by the inner housing structure 28 and the outer housing structure 30. The bypass flowpath 52 and its bypass duct are configured to bypass (e.g., are disposed radially outboard of and extend along) the engine core 48 and the inner housing structure 28.

The propulsor section 42, the LPC section 43A, the HPC section 43B, the combustor section 44, the HPT section 45A and the LPT section 45B may be arranged sequentially along the powerplant axis 36 within the propulsion system housing 26. The propulsor section 42 includes a bladed propulsor rotor 62; e.g., a fan rotor. The LPC section 43A includes a bladed low pressure compressor (LPC) rotor 63. The HPC section 43B includes a bladed high pressure compressor (HPC) rotor 64. The HPT section 45A includes a bladed high pressure turbine (HPT) rotor 65. The LPT section 45B includes a bladed low pressure turbine (LPT) rotor 66. Each of these engine rotors 62-66 includes a rotor base (e.g., a disk or a hub) and a plurality of rotor blades (e.g., airfoils, vanes, etc.). The rotor blades may be arranged into one or more stages axially along the respective engine rotor 62-66. The rotor blades in each stage are arranged and may be equispaced circumferentially around the respective rotor base in an annular array. Each of the rotor blades is connected to the respective rotor base. The rotor blades, for example, may be formed integral with or otherwise attached to the respective rotor base. Each of the rotor blades projects spanwise (e.g., radially) out from the respective rotor base to a distal tip of the respective rotor blade.

The HPC rotor 64 is coupled to and rotatable with the HPT rotor 65. The HPC rotor 64 of FIG. 1, for example, is connected to the HPT rotor 65 through a high speed shaft 68. At least (or only) the HPC rotor 64, the HPT rotor 65 and the high speed shaft 68 collectively form a high speed rotating structure 70; e.g., a high speed spool of the turbine engine 24 and its engine core 48. This high speed rotating structure 70 of FIG. 1 and its members 64, 65 and 68 are rotatable about the powerplant axis 36. However, it is contemplated the high speed rotating structure 70 may alternatively be rotatable about another axis radially and/or angularly offset from the rotational axis of the propulsor rotor 62 and/or the centerline axis of the turbine engine 24.

The LPC rotor 63 is coupled to and rotatable with the LPT rotor 66. The LPC rotor 63 of FIG. 1, for example, is connected to the LPT rotor 66 through a low speed shaft 72. At least (or only) the LPC rotor 63, the LPT rotor 66 and the low speed shaft 72 collectively form a low speed rotating structure 74; e.g., a low speed spool of the turbine engine 24 and its engine core 48. This low speed rotating structure 74 of FIG. 1 and its members 63, 66 and 72 are rotatable about the powerplant axis 36. However, it is contemplated the low speed rotating structure 74 may alternatively be rotatable about another axis radially and/or angularly offset from the rotational axis of the propulsor rotor 62 and/or the centerline axis of the turbine engine 24.

The low speed rotating structure 74 is coupled to the propulsor rotor 62 through a rotating structure-to-propulsor (RSP) drivetrain 76. The RSP drivetrain 76 may be configured as a geared drivetrain, where a geartrain 78 (e.g., a transmission, a speed change device, an epicyclic geartrain, etc.) is disposed between and operatively couples the propulsor rotor 62 to the low speed rotating structure 74 and its LPT rotor 66. With this arrangement, the propulsor rotor 62 may rotate at a different (e.g., slower) rotational speed than the low speed rotating structure 74 and its LPT rotor 66. Here, the propulsor rotor 62 and the low speed rotating structure 74 may rotate in a common (the same) direction about the powerplant axis 36 or in opposite directions about the powerplant axis 36 depending, for example, upon the specific configuration of the geartrain 78. Alternatively, the RSP drivetrain 76 may be configured as a direct-drive drivetrain, where the geartrain 78 is omitted. With such an arrangement, the propulsor rotor 62 rotates at a common (the same) rotational speed as the low speed rotating structure 74 and its LPT rotor 66.

The inner housing structure 28 of FIG. 1 includes an inner case 80 (e.g., a core case) for the turbine engine 24, an inner nacelle structure 82 (sometimes referred to as an inner fixed structure (IFS)) and an internal inner housing compartment 84 (e.g., an engine core compartment). The inner case 80 is disposed radially outboard of, extends axially along and may circumscribe one or more or all of the engine sections 43A-45B and the engine rotors 63-66. The inner case 80 may thereby house and provide a support structure for the respective engine sections 43A-45B and the engine rotors 63-66. The inner nacelle structure 82 is configured to provide an aerodynamic cover over the engine core 48 and its inner case 80. The inner housing compartment 84 of FIG. 1 is formed by and is disposed radially between the inner case 80 and an inner barrel of the inner nacelle structure 82. The inner housing structure 28 and its inner nacelle structure 82 may also form a radial inner peripheral boundary of the bypass flowpath 52.

The outer housing structure 30 of FIG. 1 includes an outer case 86 (e.g., a fan case) for the turbine engine 24, an outer nacelle structure 88 and an internal outer housing compartment 90. The outer case 86 is disposed radially outboard of, extends axially along and may circumscribe the propulsor section 42 and its propulsor rotor 62. The outer case 86 may thereby house and may be configured as a containment structure for the propulsor section 42 and its propulsor rotor 62. The outer nacelle structure 88 is configured to provide an aerodynamic cover over the outer case 86. The outer housing compartment 90 of FIG. 1 is at least partially formed by and disposed radially between the outer case 86 and an outer portion (e.g., fan cowls) of the outer nacelle structure 88. The outer housing structure 30 and its outer nacelle structure 88 may also form a radial outer peripheral boundary of the bypass flowpath 52.

During operation of the aircraft propulsion system 22 of FIG. 1, ambient air from an environment 92 external to the aircraft and its aircraft propulsion system 22 enters the aircraft propulsion system 22 and its turbine engine 24 through an airflow inlet 94. This air is propelled by the rotating propulsor rotor 62 in a downstream, aft direction towards the propulsion system aft end 40.

An outer stream of the air propelled by the rotating propulsor rotor 62 is directed into the bypass flowpath 52 through its bypass inlet 58, which air entering the bypass flowpath 52 may be referred to as "bypass air". The guide vane structure 32 conditions (e.g., straightens out, de-swirls, etc.) the flow of the bypass air within the bypass duct. This conditioned bypass air is subsequently directed out of the aircraft propulsion system 22 through the bypass exhaust 60 to provide forward thrust. This propulsion of the bypass air may account for a majority of the forward thrust generated by the aircraft propulsion system 22 and its turbine engine 24 of FIG. 1.

An inner stream of the air propelled by the rotating propulsor rotor 62 is directed into the core flowpath 50 through its core inlet 54, which air entering the core flowpath 50 may be referred to as "core air". This core air is compressed by the LPC rotor 63 and the HPC rotor 64 and is directed into a combustion chamber 96 (e.g., annular combustion chamber) of a combustor 98 (e.g., annular combustor) in the combustor section 44. Fuel is injected into the combustion chamber 96 by one or more fuel injectors 100 and mixed with the compressed core air to provide a fuel-air mixture. This fuel-air mixture is ignited and combustion products thereof flow through and sequentially drive rotation of the HPT rotor 65 and the LPT rotor 66. The rotation of the HPT rotor 65 and the LPT rotor 66 respectively drive rotation of the HPC rotor 64 and the LPC rotor 63 and, thus, compression of the air received from the core inlet 54. The rotation of the LPT rotor 66 also drives rotation of the propulsor rotor 62 through the RSP drivetrain 76. The combustion products may then be exhausted from the turbine engine 24 and its engine core 48 through the core exhaust 56.

While the turbine engine 24 is described above with a particular two rotating structure arrangement (e.g., a two-spool architecture), the present invention is not limited thereto. For example, the LPC rotor 63 may be omitted to configure the LPT rotor 66 as a power turbine (PT) rotor for the propulsor rotor 62. The turbine engine 24 may also or alternatively include another rotating structure with a bladed compressor rotor in the compressor section 43 and a bladed turbine rotor in the turbine section 45; e.g., an intermediate speed spool for the engine core 48.

Referring to FIG. 2, the accessory system 34 includes a set of one or more gearbox mounted engine accessories, an accessory gearbox 102 and a power coupler 104. The gearbox mounted engine accessories of FIG. 2 includes one or more first engine accessories 106A-E (generally referred to as "106") and a second engine accessory 108. The present invention, however, is not limited to such an exemplary gearbox mounted engine accessory arrangement. For example, the accessory system 34 may be configured with multiple of the second engine accessories 108. The accessory system 34 may also or alternatively be configured without one, more or all of the first engine accessories 106.

Each of the first engine accessories 106A-E includes a first engine accessory housing 110A-E (generally referred to as "110") (e.g., a case) and a first engine accessory rotor 112A-E (generally referred to as "112") at least partially housed within the respective first engine accessory housing 110. Each first engine accessory 106 is mounted to or otherwise arranged with the accessory gearbox 102. The first engine accessory housing 110 of each first engine accessory 106, for example, may be mechanically fastened and/or otherwise attached to a housing 114 (e.g., a case) of the accessory gearbox 102. Briefly, the gearbox housing 114 of FIG. 2 extends axially along the powerplant axis 36 (see FIG. 1) between opposing axial sides 116 and 118 of the accessory gearbox 102 and its gearbox housing 114. The gearbox housing 114 of FIG. 2 also extends laterally (e.g., circumferentially and/or tangentially) between opposing lateral ends 120 and 122 of the accessory gearbox 102 and its gearbox housing 114. The first engine accessories 106A-C may be disposed at (e.g., on, adjacent or proximate) the gearbox first side 116. The first engine accessories 106A-C of FIG. 2, for example, are arranged laterally along the gearbox first side 116 between the gearbox first end 120 and the second engine accessory 108. The first engine accessories 106D and 106E may be disposed at the gearbox second side 118. The first engine accessories 106D and 106E of FIG. 2, for example, are arranged laterally along the gearbox second side 118 between the gearbox first end 120 and the power coupler 104. The present invention, however, is not limited to such an exemplary arrangement. All of the first engine accessories 106, for example, may be disposed to the gearbox first side 116 or the gearbox second side 118.

The second engine accessory 108 includes a second engine accessory housing 124 (e.g., a case) and a second engine accessory rotor 126 at least partially housed within the second engine accessory housing 124. The second engine accessory 108 is mounted to or otherwise arranged with the accessory gearbox 102. The second engine accessory housing 124, for example, may be mechanically fastened and/or otherwise attached to the gearbox housing 114. The second engine accessory 108 may be disposed at the gearbox first side 116. The second engine accessory 108 of FIG. 2, for example, is arranged laterally along the gearbox first side 116 between the gearbox second end 122 and the first engine accessories 106A-C. The present invention, however, is not limited to such an exemplary arrangement.

Examples of the engine accessories 106 and 108 include, but are not limited to, fluid pump(s), fluid conditioner(s) and/or electric machine(s). Examples of the fluid pumps include, but are not limited to, fuel pump(s), hydraulic pump(s) and/or lubricant pump(s). Examples of the fluid conditioners include, but are not limited to, de-oiler(s) and/or separator(s). Examples of the electric machines include, but are not limited to, variable frequency generator(s), integral drive generator(s), permanent magnet motor-generator(s), permanent magnet generator(s) and/or permanent magnet motor(s).

The accessory gearbox 102 includes the gearbox housing 114, a first engine power transfer apparatus 128 and a second engine power transfer apparatus 130. Each of the power transfer apparatuses 128 and 130 is partially or completely housed within the gearbox housing 114. The power transfer apparatuses 128 and 130 of FIG. 2, for example, are partially or completely located within a common (e.g., the same) internal gearbox compartment 132 of the gearbox housing 114. A baffle, an interior wall or another barrier 134 may (or may not) be included within the gearbox compartment 132 to substantially or completely fluidly isolate a region of the gearbox compartment 132 housing the first engine power transfer apparatus 128 from a region of the gearbox compartment 132 housing the second engine power transfer apparatus 130. Alternatively, the power transfer apparatuses 128 and 130 may be located in discrete (e.g., fluidly decoupled) internal gearbox compartments of the gearbox housing 114.

The first engine power transfer apparatus 128 and the second engine power transfer apparatus 130 may be physically and operatively independent of one another inside and outside of the accessory gearbox 102 and its gearbox housing 114. Each power transfer apparatus 128, 130 of FIG. 2, for example, is spatially separated from and mechanically decoupled from the other power transfer apparatus 130, 128 within the accessory gearbox 102 and its gearbox housing 114.

The first engine power transfer apparatus 128 of FIG. 2 includes a first engine coupling 136, one or more first accessory couplings 138A-E (generally referred to as "138") and a first gear system 140. The first engine coupling 136 is operatively coupled to a first engine apparatus 142 through, for example, a first drivetrain 144. Briefly, the first drivetrain 144 may be configured as or otherwise include a shaft, a tower shaft assembly, another gearbox (e.g., an angle gearbox), and/or the like. For ease of description, the first engine apparatus 142 may be described below as the high speed rotating structure 70. However, in other embodiments, it is contemplated the first engine apparatus 142 may alternatively be the low speed rotating structure 74 or another rotating structure within the turbine engine 24 and its engine core 48 (see FIG. 1). Each first accessory coupling 138 of FIG. 2 is operatively coupled to the first engine accessory rotor 112 of a respective one of the first engine accessories 106. The first gear system 140 is (e.g., completely) housed within the accessory gearbox 102 and its gearbox housing 114. This first gear system 140 is operatively coupled between and operatively interconnects the various couplings 136 and 138A-E.

The second engine power transfer apparatus 130 of FIG. 2 includes a second engine coupling 146, a second accessory coupling 148 and a gearbox shaft 150; e.g., a pass-through shaft. The second engine coupling 146 is operatively coupled to a second engine apparatus 152 through, for example, the power coupler 104 and a second drivetrain 154. Briefly, the second drivetrain 154 may be configured as or otherwise include a shaft, a tower shaft assembly, another gearbox (e.g., an angle gearbox), and/or the like. For ease of description, the second engine apparatus 152 may be described below as the low speed rotating structure 74. However, in other embodiments, it is contemplated the second engine apparatus 152 may alternatively be the high speed rotating structure 70 or another rotating structure within the turbine engine 24 and its engine core 48 (see FIG. 1). The second accessory coupling 148 of FIG. 2 is operatively coupled to the second engine accessory rotor 126. The gearbox shaft 150 operatively interconnects the second engine coupling 146 and the second accessory coupling 148. The gearbox shaft 150 of FIG. 2, for example, extends axially along an axis 156 of the gearbox shaft 150 (e.g., across the gearbox compartment 132) between the second engine coupling 146 and the second accessory coupling 148. The gearbox shaft 150 of FIG. 2 is also formed integral with, attached to and/or otherwise connected to the second engine coupling 146 and the second accessory coupling 148. The second accessory coupling 148 is disposed at a first end of the gearbox shaft 150. The second engine coupling 146 is disposed at a second end of the gearbox shaft 150, where the shaft second end is axially opposite the shaft first end along the shaft axis 156. Here, the gearbox shaft 150 passes axially through the accessory gearbox 102 and its gearbox housing 114. The present invention, however, is not limited to such an exemplary second engine power transfer apparatus arrangement. For example, in other embodiments, the second engine power transfer apparatus 130 may include a gear system within the accessory gearbox 102, which gear system operatively couples the second engine coupling 146 and the second accessory coupling 148.

The power coupler 104 of FIG. 2 includes a coupler housing 158 (e.g., a case), a coupler transmission 160 and a coupler clutch 162, where each coupler device 160, 162 is at least partially or completely housed within the coupler housing 158. The power coupler 104 may be removably mounted to or otherwise arranged with the accessory gearbox 102. The coupler housing 158, for example, may be mechanically fastened and/or otherwise attached to the gearbox housing 114. The power coupler 104 may be disposed at the gearbox second side 118. The power coupler 104 of FIG. 2, for example, is arranged laterally along the gearbox second side 118 between the gearbox second end 122 and the first engine accessories 106D and 106E. The power coupler 104 may be laterally aligned with the second engine accessory 108 and/or the second engine power transfer apparatus 130. The coupler devices 160 and 162 of FIG. 2, for example, are coaxial with the second engine accessory rotor 126 and the gearbox shaft 150. The present invention, however, is not limited to such an exemplary arrangement. For example, the power coupler 104 and/or the second engine accessory 108 may be laterally offset from one another where: the second engine power transfer apparatus 130 includes a gear system; one or more of the coupler devices 160 and 162 are (e.g., laterally) off-center within the power coupler 104; and/or the second engine accessory rotor 126 is (e.g., laterally) off-center within the second engine accessory 108.

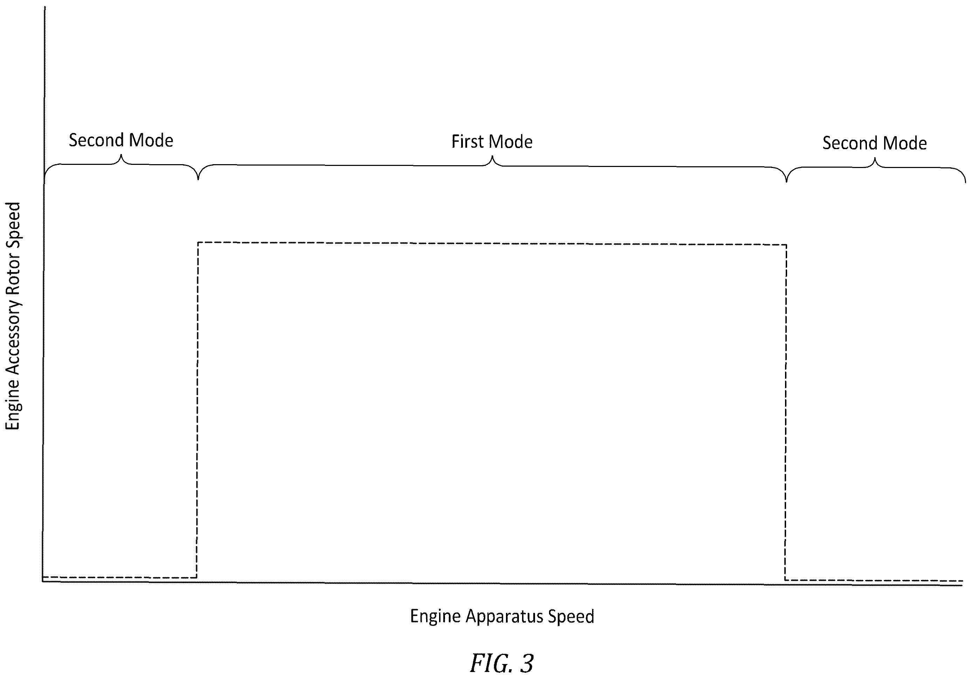

The coupler transmission 160 of FIG. 2 includes a coupler transmission-to-gearbox (CTG) member 164 and a coupler transmission-to-clutch (CTC) member 166. Examples of these transmission members 164 and 166 include, but are not limited to, power transfer devices such as input and/or output (I/O) shafts, couplings, or the like. The CTG member 164 of FIG. 2 is coupled to and is rotatable with the gearbox shaft 150 through the second engine coupling 146. The CTC member 166 of FIG. 2 is coupled to and is rotatable with a member of the coupler clutch 162. The coupler transmission 160 may be configured as a variable speed transmission. More particularly, the coupler transmission 160 may be configured as a hydrostatic transmission and/or a constant speed transmission; e.g., a hydrostatic constant speed device (CSD). With this arrangement, the coupler transmission 160 may be configured such that (a) a rotational speed of the CTG member 164 may be maintained substantially (e.g., within a 2% or 5% range) or completely uniform (e.g., constant) as (b) a rotational speed of the CTC member 166 changes; e.g., increases and/or decreases. The second engine accessory rotor 126 may thereby be rotationally driven by the second engine apparatus 152 (e.g., the low speed rotating structure 74), through the second drivetrain 154, the power coupler 104 and the accessory gearbox 102, at a substantially or completely uniform rotational speed even as a rotational speed of the second engine apparatus 152 fluctuates (e.g., increases and decreases) during aircraft powerplant operation. Similarly, the second engine accessory rotor 126 may rotationally drive the second engine apparatus 152, through the accessory gearbox 102, the power coupler 104 and the second drivetrain 154, at various different rotational speeds even as the rotational speed of the second engine accessory rotor 126 is maintained substantially or completely uniform. The foregoing member speed relationships are graphically shown in FIG. 3.

Referring to FIG. 2, the coupler clutch 162 is arranged between the coupler transmission 160 and the second drivetrain 154. The coupler clutch 162 is configured to selectively couple the coupler transmission 160 and the second drivetrain 154. For example, during a first mode of operation, the coupler clutch 162 may be engaged to operatively couple the coupler transmission 160 and the second drivetrain 154. Rotation of the second engine accessory rotor 126 is thereby tied to rotation of the second engine apparatus 152 through the engaged coupler clutch 162. By contrast, during a second mode of operation, the coupler clutch 162 may be disengaged to operatively decouple the coupler transmission 160 and the second drivetrain 154. The second engine apparatus 152 may thereby rotate independent of the second engine accessory rotor 126. The second engine accessory 108 may therefore be operationally isolated from the second engine apparatus 152 and, more generally, the turbine engine 24 and its engine core 48 (see FIG. 1). Also, by arranging the coupler clutch 162 between the second drivetrain 154 and the coupler transmission 160, the coupler transmission 160 is also operationally isolated from the second engine apparatus 152 and, more generally, the turbine engine 24 and its engine core 48 (see FIG. 1). Thus, when the coupler clutch 162 is disengaged in the second mode, rotational drag on the second engine apparatus 152 may be reduced; e.g., minimized.

In some embodiments, the mode of operation may be selected based on a rotational speed of the second engine apparatus 152; e.g., the low speed rotating structure 74. For example, when the second engine apparatus 152 is rotating at or below a threshold speed, the power coupler 104 and its coupler clutch 162 may operate in the first mode. However, when the second engine apparatus 152 is rotating above the threshold speed, the power coupler 104 and its clutch may operate in the second mode. The present invention, of course, is not limited to the foregoing exemplary power coupler schedule. For example, the mode of operation may also or alternatively be selected based on an operational need for the second engine accessory 108. For example, where there is a demand for second engine accessory operation (e.g., when the second engine accessory 108 is operational), the power coupler 104 and its coupler clutch 162 may be operated in the first mode. However, where there is no demand for second engine accessory operation (e.g., when the second engine accessory 108 is non-operational; e.g., turned off, etc.), the power coupler 104 and its coupler clutch 162 may be operated in the second mode.

In some embodiments, the power coupler 104 may be configured as a self-contained module. With such an arrangement, the power coupler 104 may have an internal lubrication system which is independent from a lubrication system 168 for the accessory gearbox 102. Possible contaminants generated by wear of elements of the coupler clutch 162 may thereby be kept out of the accessory gearbox 102, as well as other systems fluidly coupled to the accessory gearbox 102. In addition, by independently mounting the power coupler 104 to the accessory gearbox 102, the power coupler 104 may be removed from the accessory gearbox 102 as a single line replaceable unit (LRU) without requiring removal and/or disconnecting of aircraft powerplant components such as other engine accessories; e.g., 106A-E and/or 108.

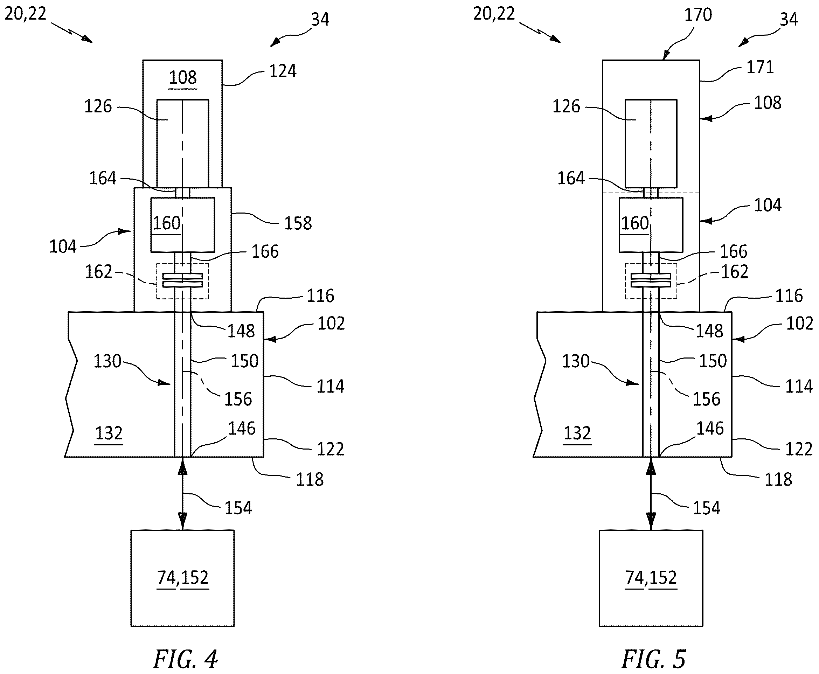

In some embodiments, referring to FIG. 2, the power coupler 104 and the second engine accessory 108 may be located to the opposing axial sides 118 and 116 of the accessory gearbox 102 and its gearbox housing 114, respectively. With this arrangement, the power coupler 104 and the second engine accessory 108 may each be removably attached (e.g., mechanically fastened) to the exterior of the accessory gearbox 102 and its gearbox housing 114. Moreover, the accessory gearbox 102 and its gearbox housing 114 (e.g., axially) physically separate the power coupler 104 from the second engine accessory 108. In other embodiments, referring to FIGS. 4 and 5, the power coupler 104 and the second engine accessory 108 may be located to a common one of the axial sides 116, 118 of the accessory gearbox 102 and its gearbox housing 114; e.g., the gearbox first side 116. For example, the power coupler 104 of FIG. 4 is removably attached to the exterior of the accessory gearbox 102 at its gearbox first side 116. The second engine accessory 108 is removably attached to an exterior of the power coupler 104 and its coupler housing 158. With this arrangement, the second engine accessory 108 is indirectly mounted to the accessory gearbox 102 through the power coupler 104. In another example, the power coupler 104 of FIG. 5 is integrated with the second engine accessory 108 into a module 170; e.g., a single line-replaceable unit (LRU). More particularly, the coupler devices 160 and 162 and the second engine accessory rotor 126 of FIG. 5 are arranged within a common housing 171 (e.g., a case) for the power coupler-accessory module 170.

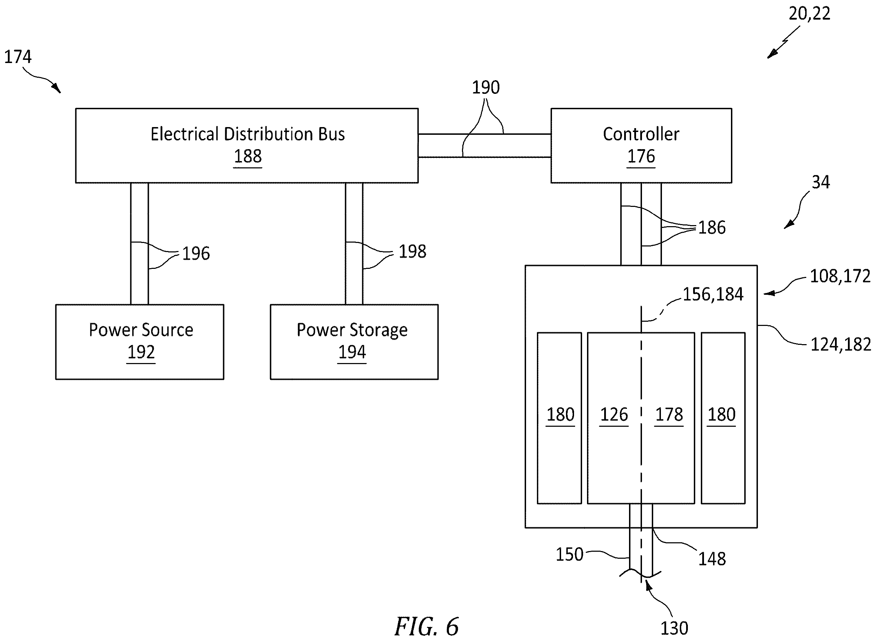

In some embodiments, referring to FIG. 6, the second engine accessory 108 may be configured as an electric machine 172 that is electrically coupled to an electrical system 174 through an electric machine (EM) controller 176. The electric machine 172 of FIG. 6 includes an electric machine rotor 178 (here, the second engine accessory rotor 126), an electric machine stator 180 and an electric machine housing 182 (here, the second engine accessory housing 124). The machine rotor 178 is rotatable about a rotational axis 184 of the machine rotor 178, which rotational axis 184 may also be an axial centerline of the electric machine 172 and coaxial with the shaft axis 156. The machine stator 180 of FIG. 6 is radially outboard of and circumscribes the machine rotor 178. With this arrangement, the electric machine 172 is configured as a radial flux electric machine. The electric machine 172 of the present invention, however, is not limited to such an exemplary rotor-stator configuration nor to radial flux arrangements. The machine rotor 178, for example, may alternatively be radially outboard of and circumscribe the machine stator 180. In another example, the machine rotor 178 may be axially next to the machine stator 180 configuring the electric machine 172 as an axial flux electric machine. Referring again to FIG. 6, the machine rotor 178 and the machine stator 180 are at least partially or completely housed within an interior of the machine housing 182.

The electric machine 172 of FIG. 6 may be configurable as an electric motor and/or an electric generator; e.g., an electric motor-generator. For example, during a motor mode of operation, the electric machine 172 may operate as the electric motor to convert electricity received from the aircraft electrical system 174. The machine stator 180, for example, may generate an electromagnetic field with the machine rotor 178 using a current of electricity received from the aircraft electrical system 174 through the EM controller 176. This electromagnetic field may drive rotation of the machine rotor 178. The machine rotor 178, in turn, may provide mechanical power to and drive rotation of the second engine apparatus 152 (see FIG. 2) and/or other elements through the power coupler 104 (see FIG. 2). This mechanical power may be provided to boost power or completely power the rotation of the second engine apparatus 152 (see FIG. 2) and/or other elements. By contrast, during a generator mode of operation, the electric machine 172 may operate as the electric generator to convert mechanical power received from the second engine apparatus 152 (see FIG. 2) and/or other elements into electricity. Rotation of the machine rotor 178, for example, may be rotationally driven by rotation of the second engine apparatus 152 (see FIG. 2) and/or other elements through the power coupler 104 (see FIG. 2). The rotation of the machine rotor 178 may generate an electromagnetic field with the machine stator 180, and the machine stator 180 may convert energy from the electromagnetic field into electricity. The electric machine 172 may then provide a current of electricity to the aircraft electrical system 174 through the EM controller 176 for storage and/or further use. The electric machine 172 of the present invention, however, is not limited to such exemplary operation. For example, the electric machine 172 may alternatively be configured as a dedicated electric generator; e.g., without the electric motor functionality. In another example, the electric machine 172 may be configured as a dedicated electric motor; e.g., without the electric generator functionality.

The EM controller 176 is electrically coupled to the electric machine 172 through one or more electric cables 186; e.g., high voltage electric cables, power feeder cables, etc. More particularly, controller circuitry in the EM controller 176 is electrically coupled to the electric machine 172 and its machine stator 180 through the electric cables 186. Similarly, the EM controller 176 is electrically coupled to an electrical distribution bus 188 of the aircraft electrical system 174 through one or more electric cables 190; e.g., high voltage electric cables, power feeder cables, etc. More particularly, the controller circuitry in the EM controller 176 is electrically coupled to the aircraft electrical system 174 and its electrical distribution bus 188 through the respective electric cables 190.

The EM controller 176 and its controller circuitry are configured to control operation of the electric machine 172. For example, when operating as the electric motor, the EM controller 176 is configured to regulate a flow of electricity from the aircraft electrical system 174 to the electric machine 172. This electricity flow regulation may include: (a) turning-on the flow of electricity from the aircraft electrical system 174 to the electric machine 172 (e.g., electrically coupling the electric machine 172 to the aircraft electrical system 174); (b) turning-off the flow of electricity from the aircraft electrical system 174 to the electric machine 172 (e.g., electrically decoupling the electric machine 172 from the aircraft electrical system 174); (c) moderating the flow of electricity from the aircraft electrical system 174 to the electric machine 172. Here, the EM controller 176 operates as a motor controller. In another example, when operating as the electric generator, the EM controller 176 is configured to regulate a flow of electricity from the electric machine 172 to the aircraft electrical system 174. This electricity flow regulation may include: (a) turning-on the flow of electricity from the electric machine 172 to the aircraft electrical system 174 (e.g., electrically coupling the electric machine 172 to the aircraft electrical system 174); (b) turning-off the flow of electricity from the electric machine 172 to the aircraft electrical system 174 (e.g., electrically decoupling the electric machine 172 from the aircraft electrical system 174); (c) moderating the flow of electricity from the electric machine 172 to the aircraft electrical system 174. Here, the EM controller 176 operates as a generator controller.

The aircraft electrical system 174 includes the electrical distribution bus 188. This aircraft electrical system 174 may also include a power source 192 and/or a power storage 194. The electrical distribution bus 188 is electrically coupled to the electric machine 172 through the EM controller 176. The electrical distribution bus 188 is also electrically coupled to the power source 192 and the power storage 194, respectively via electric cables 196 and 198; e.g., high voltage electric cables, power feeder cables, etc. With this arrangement, the electrical distribution bus 188 provides an intermediate connection between the various electrical aircraft propulsion system members 172 (via 176), 192 and 194. The power source 192 may be an electric generator powered by the turbine engine 24 (see FIG. 1) or an electric generator powered by another aircraft powerplant; e.g., an engine of a companion aircraft propulsion system, an engine of an auxiliary power unit (APU), a fuel cell system, etc. The power storage 194 is configured to receive electricity from the electrical distribution bus 188 for storage. The power storage 194 is also configured to provide the stored electricity to the electrical distribution bus 188. The power storage 194, for example, may be configured as or otherwise include one or more electricity storage devices; e.g., batteries, super capacitors, etc.

Referring to FIG. 2, it is also contemplated one or more of the first engine accessories 106 (e.g., 106A and/or 106B) may each be configured as an electric machine (e.g., an electric motor-generator, an electric motor or an electric generator) associated with the first engine apparatus 142.

In some embodiments, referring to FIG. 1, the accessory gearbox 102 may be arranged in the inner housing compartment 84. The accessory gearbox 102, for example, may be mounted to the inner case 80. The present invention, however, is not limited to such an exemplary accessory gearbox location or mounting arrangement. For example, it is contemplated the accessory gearbox 102 may alternatively be arranged in the outer housing compartment 90 or another location.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly for an aircraft powerplant (20), the assembly comprising:
a gearbox (102) including a first power transfer apparatus (128) and a second power transfer apparatus (130) that is operationally independent of the first power transfer apparatus (128), wherein the first power transfer apparatus (128) is configured to operatively couple and transfer first mechanical power through the gearbox (102) between a first engine apparatus (142) and a first engine accessory (106), and the second power transfer apparatus (130) is configured to operatively couple and transfer second mechanical power through the gearbox (102) between a second engine apparatus (152) and a second engine accessory (108) during a first mode; and
a power coupler (104) including a variable speed transmission (160) and a clutch (162), wherein the variable speed transmission (160) is operatively coupled between the clutch (162) and the second power transfer apparatus (130), the clutch (162) is configured to operatively couple the variable speed transmission (160) to the second engine apparatus (152) during the first mode, and the clutch (162) is configured to operatively decouple the variable speed transmission (160) from the second engine apparatus (152) during a second mode.

2. The assembly of claim 1, wherein:
the variable speed transmission (160) includes a first member (164) and a second member (166), wherein the first member (164) is operationally coupled to the second power transfer apparatus (130) and the second member (166) is operationally coupled to the clutch (162); and
the variable speed transmission (160) is configured such that a rotational speed of the first member (164) is maintained uniform as a rotational speed of the second member (166) changes.

3. The assembly of claim 1 or 2, wherein:
the variable speed transmission (160) comprises a constant speed transmission; and/or
the variable speed transmission (160) comprises a hydrostatic transmission.

4. The assembly of any preceding claim, wherein the power coupler (104) is configured to:
operate in the first mode when a rotational speed of the second engine apparatus (152) is equal to or less than a threshold; and
operate in the second mode when the rotational speed of the second engine apparatus (152) is greater than the threshold.

5. The assembly of any preceding claim, further comprising the second engine accessory (108), wherein the power coupler (104) is configured to operate in the first mode when the second engine accessory (108) is operational, and the power coupler (104) is configured to operate in the second mode when the second engine accessory (108) is non-operational.

6. The assembly of any preceding claim, wherein the power coupler (104) is mounted to an exterior of the gearbox (102).

7. The assembly of any preceding claim, wherein the power coupler (104) is configured as a single line replaceable unit that is removably mounted to the gearbox (102).

8. The assembly of any preceding claim, wherein the second engine accessory (108) is mounted to the gearbox (102) through the power coupler (104).

9. The assembly of any of claims 1 to 7, wherein the second engine accessory (108) is mounted to the gearbox independent of the power coupler (104).

10. The assembly of claim 9, wherein:
the power coupler (104) is mounted to a first side of the gearbox (102); and
the second engine accessory (108) is mounted to a second side of the gearbox (102) opposite the first side of the gearbox (102).

11. The assembly of any preceding claim, wherein the second power transfer apparatus (130) is configured as a pass-through shaft extending through the gearbox (102).

12. The assembly of any preceding claim, further comprising the second engine accessory (108), wherein the second engine accessory (108) is configured as an electric machine (172).

13. The assembly of any preceding claim, further comprising:
the first engine apparatus (142) comprising a first engine rotating structure (70);
the second engine apparatus (152) comprising a second engine rotating structure (74);
a compressor section (43);
a combustor section (44);
a turbine section (45); and
a flowpath (50) extending through the compressor section (43), the combustor section (44), and the turbine section (45),
wherein the first engine rotating structure (70) comprises a first bladed rotor (64, 65) disposed in the compressor section (43) or the turbine section (45), and the second engine rotating structure (74) comprises a second bladed rotor (63, 66) disposed in the compressor section (43) or the turbine section (45).

14. The assembly of claim 13, wherein
the first bladed rotor (64, 65) comprises a first turbine rotor (65) disposed in the turbine section (45);
the second bladed rotor (63, 66) comprises a second turbine rotor (66) disposed in the turbine section (45); and
the first bladed rotor (65) is disposed between the second bladed rotor (66) and the combustor section (44) along the flowpath (50).

15. The assembly of any preceding claim, wherein the first power transfer apparatus (128) comprises a gear system disposed within an interior of the gearbox (102).
